# EUROPEAN PATENT SPECIFICATION

(11) **EP 3 448 715 B1**
(45) Date of publication and mention of the grant of the patent: **16.10.2019**
(21) Application number: 16730043.3
(22) Date of filing: 27.04.2016
(51) Int. Cl.: B60N 2/22, B60N 2/235, B60N 2/30, B60N 2/20

(54) **ADJUSTABLE BACKREST MECHANISM FOR CAR SEATS**
VERSTELLBARER RÜCKENLEHNENMECHANISMUS FÜR AUTOSITZE
MÉCANISME DE DOSSIER RÉGLABLE POUR SIÈGES DE VOITURE

(43) Date of publication of application: 06.03.2019
(73) Proprietor: Assan Hanil Otomotiv Sanayi Ve Ticaret Anonim Sirketi, 41305 Izmit/Kocaeli (TR)
(72) Inventor: GENCAN, Ozge, 41305 Izmit/Kocaeli (TR); GUNER, Aykut, 41305 Izmit/Kocaeli (TR)
(74) Representative: Yamankaradeniz, Kemal
(86) International application number: PCT/TR2016/050126
(87) International publication number: WO 2017/188900

(56) References cited:
- EP-A1- 0 738 624
- EP-A1- 1 302 361
- EP-A2- 1 291 236
- GB-A- 799 702
- US-A1- 2002 171 279
- US-A1- 2012 286 556

## Description

### Technical Field

The invention relates to a mechanism that will be used in car seats and that enables adjusting the part of the seats corresponding to shoulders forward and backwards.

### Background of the Invention

In state of the art applications, demounting and remounting problems occur since the mentioned mechanism of competitor companies is produced as a whole.

Also, in state of the art applications, the abovementioned mechanism needs to be replaced completely when the mechanism breaks down.

GB799702A dicloses a foldable seat for an aircraft cabin having a chassis fixed to the floor and carrying a seat portion, arm rests and a back mounted on a transverse rockable shaft to be movable between a position resting on the seat portion and a rearwardly inclined position, and locking mechanism to lock the back in selected positions of adjustment, the mechanism being capable of being over-ridden by a forwardly directed force applied to the back to fold it down on to the seat.

In conclusion, the existence of the problems mentioned above and the insufficiency of the existing solutions about the matter have necessitated making an improvement on the related technical field.

### Purpose of the Invention

The invention, inspired by the existing situation, aims to solve the abovementioned problems.

Main object of the invention is to produce the framework of the backrest in car seats in two parts with lower and upper welding, thus mount the mentioned backrest framework with backrest adjusting mechanism parts.

Another object of the invention is, when there is a part that needs to be replaced, to enable easily demounting and replacing the mentioned part due to the mentioned mounting process.

Another object of the invention is to enable easily demounting the adjustable backrest mechanism of the invention in car seats later.

In order to perform the above-mentioned objects, the adjustable backrest mechanism of the invention in car seats containing a button mechanism the features according to claim 1.

The structural and characteristic features and all advantages of the invention will be more clearly understood by the figures given below and detailed written description addressed to the figures. Therefore, evaluation should be done by taking into account these figures and the detailed description.

### Figures to help understand the Invention

**Figure 1** is a two dimensional view of the preferred embodiment of the backrest upper framework and backrest lower framework of the adjustable backrest mechanism of the invention in car seats.
**Figure 2** is a two dimensional view of the preferred embodiment of the disassembled backrest upper framework and backrest lower framework of the adjustable backrest mechanism of the invention in car seats.
**Figure 3** is a two dimensional view of the preferred embodiment of the disassembled backrest lower framework and gear mechanism of the adjustable backrest mechanism of the invention in car seats.
**Figure 4** is a two dimensional view of the preferred embodiment of the disassembled gear mechanism and button mechanism of the adjustable backrest mechanism of the invention in car seats.
**Figure 5** is a two dimensional view of the preferred embodiment of the assembled adjustable backrest mechanism of the invention in car seats.
**Figure 6** is a two dimensional side view of the preferred embodiment of the adjustable backrest mechanism of the invention in car seats in the front position.

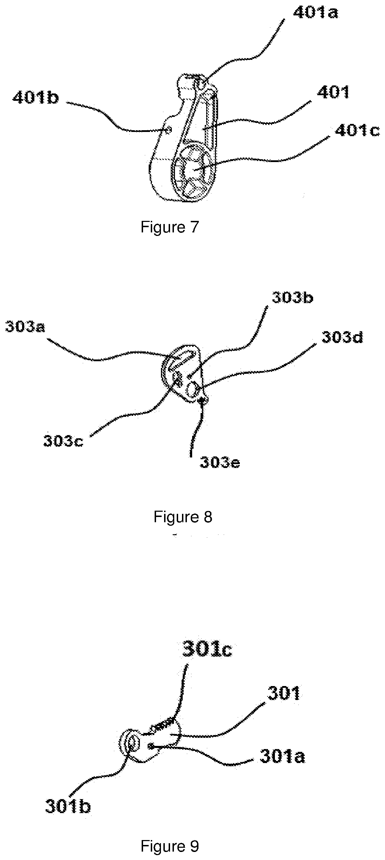

**Figure 7** is a two dimensional view of the preferred embodiment of the button adjustment part of the adjustable backrest mechanism of the invention in car seats.
**Figure 8** is a two dimensional view of the preferred embodiment of the guide part of the adjustable backrest mechanism of the invention in car seats.
**Figure 9** is a two dimensional view of the preferred embodiment of gear part of the adjustable backrest mechanism of the invention in car seats.

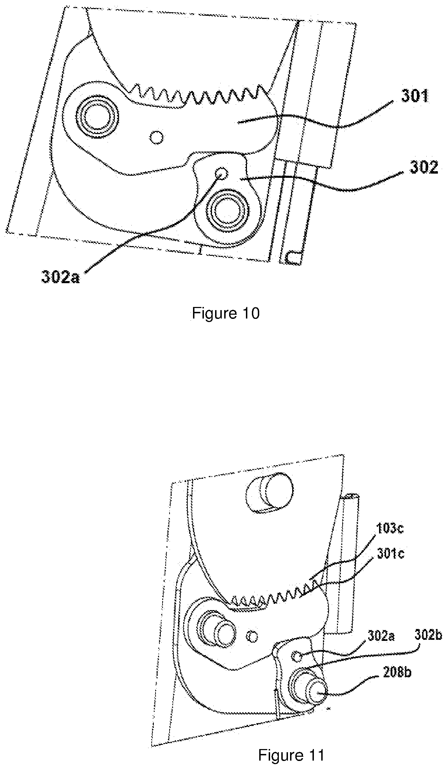

**Figure 10** is a two dimensional view of the preferred embodiment of the assembled gear part, support part and upper connection left bracket of the adjustable backrest mechanism of the invention in car seats.
**Figure 11** is a two dimensional view of the preferred embodiment of the support protrusion and support spacing of the support part belonging to the adjustable backrest mechanism of the invention in car seats.

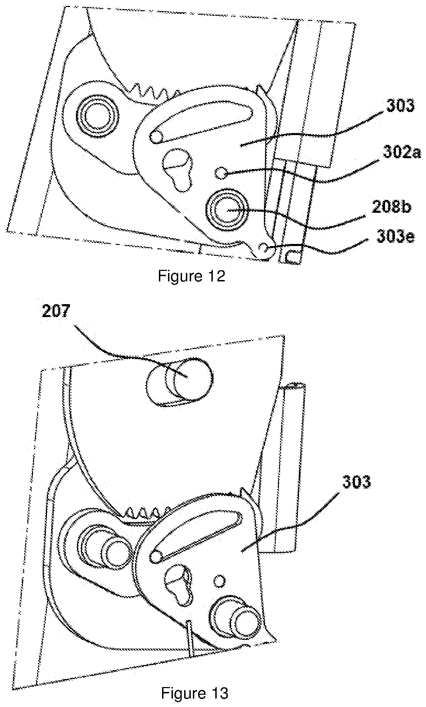

**Figure 12** is a two dimensional view of the preferred embodiment of the assembled gear part, support part and guide part of the adjustable backrest mechanism of the invention in car seats.
**Figure 13** is a two dimensional view of the preferred embodiment of the assembled gear part, stop pin and upper connection left bracket of the adjustable backrest mechanism of the invention in car seats.

### Part References

**100.** Backrest upper framework
   **101.** Backrest upper pipe
   **102.** Upper connection right bracket
   103. Upper connection left bracket
      **103a.** Bracket spacing 1
      **103b.** Bracket spacing 2
      **103c.** Teeth 1
   **104.** Feedback spring
      **104a.** Feedback end
   **105.** Spring connection plate
**200.** Backrest lower framework
   **201.** Backrest lower pipe
   **202.** Backrest right reinforcement
   **203.** Lower connection left bracket
   **204.** Connection ring
   **205.** Wire lower connection bracket
   **206.** Backrest left reinforcement
   **207.** Stop pin
   **208a.** Bearing pin 1
   **208b.** Bearing pin 2
   **209.** Wire upper connection bracket
**300.** Gear mechanism
   **301.** Gear part
      **301a.** Gear protrusion
      **301**b. Gear spacing
      **301c.** Teeth 2
   **302.** Support part
      **302a.** Support protrusion
      **302b.** Support spacing
   **303.** Guide Piece
      **303a.** Guide spacing 1
      **303b.** Guide spacing 2
      **303c.** Guide spacing 3
      **303d.** Guide spacing 4
      **303e.** Guide spacing 5
   **304.** Spring 1
   **305.** Mechanism cover part
   **306.** Bolt
   **307.** Nut
   **308.** Wire
**400.** Button Mechanism
   **401.** Button adjustment part
      **401a.** Button adjustment spacing 1
      **401b.** Button adjustment spacing 2
      **401c.** Button adjustment spacing 3
   **402.** Button
   **403.** Screw
   **404.** Button lid
   **405.** Button bearing pin
   **406.** Spring 2

Drawings do not necessarily need to be scaled and details that are not essential to understand the present invention may have been omitted. Also, at least significantly identical components or components with at least significantly identical functions are designated using the same number.

### Detailed Description of the Invention

In this detailed description, preferred embodiments of the adjustable backrest mechanism according to the invention in car seats are described only for the better understanding of the invention.

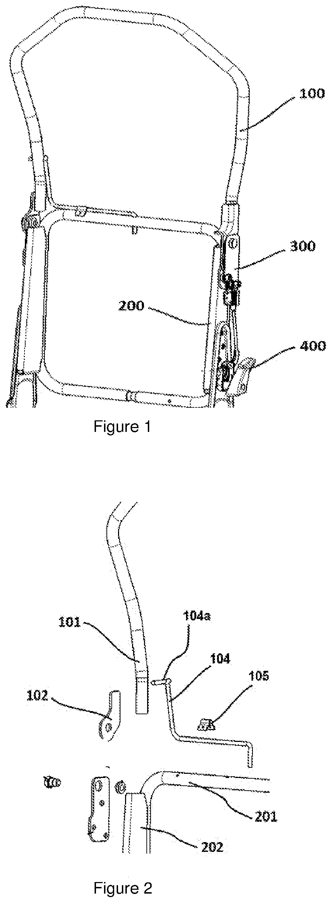

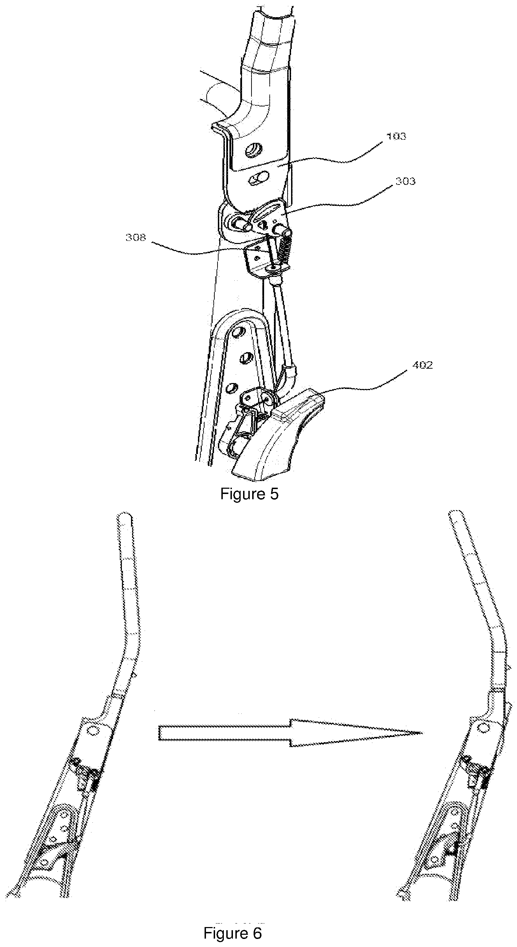

As seen in Figure 1, the adjustable backrest mechanism according to the invention in car seats essentially consists of the backrest upper framework (100) and backrest lower framework (200). The mentioned upper and lower frameworks contain mechanism groups that enable fixing the mentioned upper and lower frameworks by being locked around a defined axis; that provide the forward or backwards movement of the backrest upper framework (100) group gradually with respect to the point of contact with the mentioned lower framework (200) by releasing of the lock as seen in Figure 6.

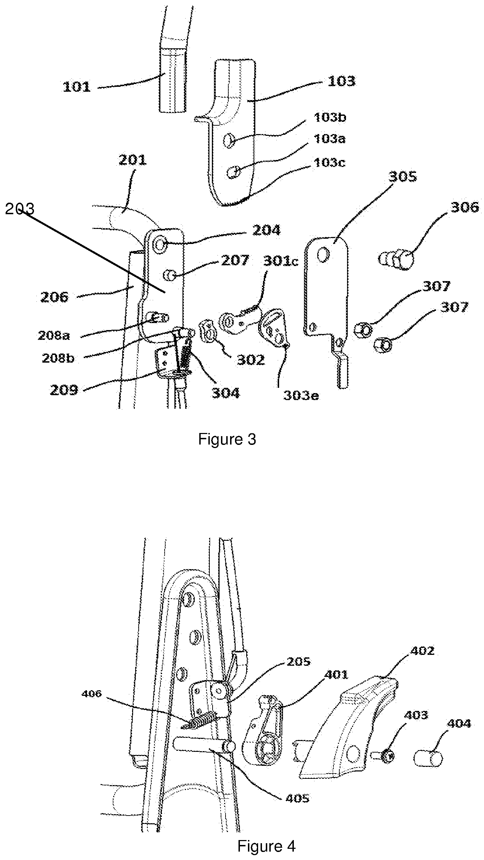

As seen in Figure 2 and Figure 3, the mentioned backrest lower framework (200) essentially consists of a backrest lower pipe (201), a backrest right reinforcement (202) and a backrest left reinforcement (206) that are designed to support the mentioned backrest lower pipe (201). A lower connection bracket (203) that is connected to the mentioned backrest lower framework (200) connects to the backrest upper framework (100) by a bracket spacing 2 (103b) contact of a connection ring (204) positioned on the mentioned lower connection bracket (203). A stop pin (207) connected on the mentioned lower connection bracket (203) defines the limits of the forward or backwards movement of the mentioned backrest upper framework (100) with respect to the mentioned backrest lower framework (200) by contacting a bracket spacing 1 (103a). Moreover, as seen in Figure 2, a feedback spring (104) is connected to the mentioned backrest upper pipe (101) by means of a feedback end (104a) and to the mentioned backrest lower pipe (201) by means of a spring connection plate (105).

Parts of a gear mechanism (300) are connected on the bearing pin 1 (208a) and bearing pin 2 (208b) that are positioned on the mentioned lower connection bracket (203). As seen in Figure 3, the mentioned bearing pin 1 (208a) is connected to a gear spacing (301b) and bearing pin 2 (208b) is connected to a guide spacing 4 (303d). Meanwhile, the mentioned bearing pin 2 (208b) is connected to a support part (302) by means of a support spacing (302b).

The backrest upper framework (100) essentially consists of the mentioned backrest upper pipe (101). An upper connection right bracket (102) and an upper connection left bracket (103) that connect to the mentioned backrest upper pipe (101) by means of at least one bolt (306) and at least one nut (307) and the mentioned backrest lower framework (200) are connected to each other. The mentioned backrest upper framework (100) connects to the mentioned backrest lower framework (200) in the mentioned way and can rotate freely around the mentioned connection ring (204) by means of the mentioned bracket spacing 2 (103b) by the movement of teeth 1 (103c) positioned on the lower part of the mentioned upper connection left bracket (103) and teeth 2 (301c) positioned on one gear part (301) on each other. Also, as seen in Figure 2, a feedback spring (104) is connected to the mentioned backrest upper pipe (101) by means of a feedback end (104a) and to the mentioned backrest lower pipe (201) by means of a spring connection plate (105).

After the mentioned backrest upper framework (100) and the mentioned backrest lower framework (200) are connected to each other, the adjustable backrest mechanism according to the invention in car seats can be locked to an identified set position by means of the mentioned gear mechanism (300). When a button mechanism (400) is activated, the mentioned backrest upper framework (100) can be adjusted in forward or backwards direction in defined intervals with respect to the mentioned backrest lower framework (200) by unlocking the mentioned gear mechanism (300).

The mentioned gear mechanism (300) is comprised of the mentioned gear part (301); the mentioned support part (302) that is positioned on the lower part of the mentioned gear part (301) and that helps it get locked; a guide part (303) that enables the mentioned gear part (301) to switch to lock position and enables opening the lock and that is connected to the mentioned support part (302) by means of a support protrusion (302a) and a guide spacing 2 (303b); and a mechanism cover part (305) that houses the mentioned gear part (301), the mentioned support part (302) and the mentioned guide part (303) and also keeps their position fixed. Teeth 2 (301c) on the mentioned gear part (301) that is positioned on the mentioned gear mechanism (300) correspond to the teeth 1 (103c) positioned on the lower part of the mentioned upper connection left bracket (103). The mentioned guide part (303) is continuously pulled by a spring 1 (304) it is connected to by means of a guide spacing 5 (303e) and keeps the mentioned gear part (301) in locked position.

As seen in Figure 3, a wire upper connection bracket (209) connected to the mentioned backrest lower framework (200) and a wire (308) mounted on a wire lower connection bracket (205) transfer the actuation movement from the mentioned button mechanism (400) to the mentioned guide part (303) that they are connected to by means of a guide spacing 3 (303c). When the mentioned gear part (301) that is connected to the mentioned guide part (303) by means of a guide spacing 1 (303a) and a gear protrusion (301a) moves downward, the contact between the teeth 1 (103c) positioned on the mentioned upper connection left bracket (103) and the teeth 2 (301c) on the mentioned gear part (301) is removed. Therefore, the mentioned backrest upper framework (100) is moved forward or backwards with respect to the mentioned backrest lower framework (200) and locking is again provided.

As seen in Figure 4, a button adjustment part (401) that is connected on a button bearing pin (405) - by means of a button adjustment spacing 3 (401c) - connected on a backrest lower framework (200) is tensioned so as to lock teeth 1 (103c) and teeth 2 (301c) by means of a spring 2 (406) it is connected to by means of a button adjustment spacing 2 (401b). In order to unlock the mentioned lock, a button (402) connected to the mentioned button adjustment part (401) is actuated by an external force and pulls the mentioned button adjustment part (401) in the opposite direction of the mentioned spring 2 (406) and transmits the motion to the mentioned gear mechanism (300) by means of the mentioned wire (308) connected to the mentioned button adjustment part (401). Thus, the lock is unlocked.

As seen in Figure 4, the mentioned button (402) is connected to a screw (403) and to the mentioned bearing pin (405) through the mentioned button adjustment part (401). The mentioned screw (403) is housed in a button cap (404)

The working principle and function of the parts during operation of the adjustable backrest mechanism in car seats, with part positions, properties and functions given above are as follows:
- When the user actuates the mentioned button (402), the mentioned button adjustment part (401) that the mentioned button (402) is connected to and that is connected to the mentioned bearing pin (405) by means of the mentioned button adjustment spacing 3 (401c) stretches the mentioned spring 2 (406) it is connected to by means of the mentioned button adjustment spacing 2 (401b) seen in Figure 4. Moreover, the mentioned button adjustment part (401) pulls the mentioned wire (308) that is mounted on the mentioned wire upper connection bracket (209) and the mentioned wire lower connection bracket (205) seen in Figure 3 and Figure 4 and that is connected to the mentioned button adjustment part (401) by means of the mentioned button adjustment spacing 1 (401c) downward.
- When the mentioned wire (308) is pulled downward, the mentioned guide part (303) to which the mentioned wire (308) is connected by means of the mentioned guide spacing 3 (303c) is pulled forward and downward.
- With the movement of the mentioned guide part (303) forward and downward, the support part (302) it is connected to by means of the mentioned guide spacing 2 (303b) and the mentioned support protrusion (302a) also moves forward and downward. In the meantime, with the movement of the mentioned guide part (303) forward and downward, the mentioned gear part (301) that it is connected to by means of the mentioned guide spacing 1 (303a) and the mentioned gear protrusion (301a) moves down around the axis of the bearing pin 1 (208a) that it is connected to by means of the mentioned gear spacing (301b). Furthermore, with the movement of the mentioned guide part (303) forward and downward, the mentioned spring 1 (304) that is connected to the mentioned guide part (303) by means of the mentioned guide spacing 5 (303e) is pulled upwards and becomes stretched.
- With forward movement of the mentioned gear part (301), the connection between the mentioned teeth 2 (301c) on the mentioned gear part (301) and the mentioned teeth 1 (103c) on the lower part of the mentioned upper connection left bracket disappears ad the mentioned teeth become free. Therefore the lock is unlocked.
- With the mentioned teeth becoming free and the lock unlocked, the user may adjust the mentioned backrest upper framework (100) of the seat forward or backward with respect to the mentioned backrest lower framework (200) by rotating around the connection ring (204) that is connected to the mentioned bracket spacing 2 (130b) positioned on the mentioned upper connection left bracket (103). Meanwhile, the mentioned stop pin (207) that is connected to the mentioned upper connection left bracket (103) by means of the mentioned bracket spacing 1 (103a) positioned on the mentioned upper connection left bracket (103) limits the movement of the mentioned backrest upper framework (100).
- After the user adjusts the mentioned backrest upper framework (100) to the desired position, the mentioned button (402) is released by the user.
- The mentioned button adjustment part (401) that is connected to the mentioned button (402) and that moves with the mentioned button (402) returns back to its initial position with the mentioned spring 2 (406) that it is connected to by means of the mentioned button adjustment spacing (401b) going from stretched position to non-stretched position.
- With the mentioned button adjustment part (401) returning to its initial position, the mentioned wire (308) that it is connected to by means of the mentioned button adjustment spacing 1 (401a) is released and goes up.
- With the mentioned wire (308) becoming free, the mentioned guide part (303) it is connected to by means of the mentioned guide spacing 3 (303c) is released and the mentioned stretched spring 1 (304) that is connected to the mentioned guide part by means of the mentioned guide spacing 5 (303e) becomes free and it pulls the mentioned guide part (303) backwards and upwards.
- With the movement of the mentioned guide part (303) backwards and upwards, the mentioned support part (302) that it is connected to by means of the mentioned guide spacing 2 (303b) and the mentioned support protrusion (302a) also moves upwards. Meanwhile, with the movement of the mentioned guide part (303) backwards and upwards; the mentioned gear part (301) that is connected to the mentioned guide part (303) by means of the mentioned gear protrusion (301a) and the mentioned guide spacing 1 (303a) moves upwards by rotating around the axis of the mentioned bearing pin 1 (208a) that it is connected to by means of the mentioned gear spacing 2 (301b).
- With upwards movement of the mentioned gear part (301), teeth 2 (301c) on the upper part of the mentioned gear part (301) and teeth 1 (103c) positioned on the lower part of the mentioned upper connection left bracket come back into contact and are engaged. Thus, locking is enabled and the mentioned backrest upper framework (100) is fixed at the user's desired position on the mentioned backrest lower framework (200).

Moreover, when the user actuates the mentioned button (402) and releases the mentioned backrest upper framework (100) of the seat; the mentioned backrest upper framework (100) returns to its initial position by means of the mentioned feedback spring (104).

## Claims

1. Adjustable backrest mechanism in car seats containing a button mechanism (400) comprising:
- a backrest upper pipe (101) constituting the body of a backrest upper framework (100),
- a backrest lower pipe (201) constituting the body of a backrest lower framework (200),
- an upper connection right bracket (102) that is connected to the mentioned backrest upper pipe (101) and to the mentioned backrest lower pipe (201); thus connecting the mentioned backrest upper framework (100) and the mentioned backrest lower framework (200),
- an upper connection left bracket (103) that is connected to the mentioned backrest upper pipe (101) and to the mentioned backrest lower pipe (201); that comprising
∘ at least one bracket spacing 1 (103a),
∘ at least one bracket spacing 2 (103b), and
∘ teeth 1 (103c),
- a lower connection bracket (203) connecting the mentioned backrest upper framework (100) and the mentioned backrest lower framework (200),
- at least one connection ring (204) that is connected to the mentioned bracket spacing 2 (103b) and that enables forward or backwards movement of the mentioned backrest upper framework (100) on the mentioned backrest lower framework (200),
- a wire lower connection bracket (205) that is the lower connection bearing part of a pipe, in which a wire (308) is positioned, and that has a spring 2 (406) positioned on it, a wire upper connection bracket (209) that is the upper connection bearing part of said pipe, in which the mentioned wire (308) is positioned, and that has a spring 1 (304) positioned on it,
- the mentioned wire (308) pulling forward and downward a guide part (303) by means of a guide spacing 1 (303c) when pulled down by a button adjustment part (401) by means of a button adjustment spacing 1 (401a) and being pulled upwards by said guide part (303) when said button adjustment part (401) is released,
- a bearing pin 1 (208a) that is connected to a gear part (301) by means of at least one gear spacing (301b) on the gear part and that is positioned on the mentioned lower connection bracket (203),
- a bearing pin 2 (208b) that is connected to the mentioned guide part (303) by means of at least one guide spacing 4 (303d) on the mentioned guide part (303) and connected to a support part (302) by means of at least one support spacing (302b) positioned on the mentioned support part (302) and that is positioned on the mentioned lower connection bracket (203),
- the mentioned spring 2 (406) that is connected to the mentioned button adjustment part (401) by means of at least one button adjustment spacing 2 (401b), that becomes stretched by pulling the mentioned button adjustment part (401) and returns back to non-stretched position when it is released,
- the mentioned spring 1 (304) that is positioned on the mentioned wire upper connection bracket (209), which is connected to the mentioned backrest upper framework (100), and that becomes stretched with forward and downward movement of the mentioned guide part (303) it is connected to by means of at least one guide spacing 5 (303e),
- a button (402) that is connected to the mentioned button adjustment part (401) that transmits the actuation movement of the user through the mentioned button adjustment part (401) to the mentioned wire (308) that the mentioned button adjustment part (401) is connected to by means of the mentioned button adjustment spacing 1 (401a); and that is mounted on a button bearing pin (405),
- the mentioned button adjustment part (401) that renders the mentioned spring 2 (406) stretched by means of the mentioned button adjustment spacing 1 (401a) and pulls the mentioned wire (308) down after the mentioned button (402) is actuated by the user, and is returned to its initial position by the mentioned spring 2 (406) after the mentioned button (402) is released and releases the mentioned wire (308); and that is connected to the mentioned button bearing pin (405) by means of at least one button adjustment spacing 3 (401c),
- the mentioned spring 2 (406), that is positioned on the mentioned wire lower connection bracket (205), which is connected to the mentioned backrest lower framework (100), that keeps the mentioned button adjustment part (401), which is mounted on the mentioned button bearing pin (405) that it is connected to by means of the mentioned button adjustment spacing 2 (401b), in locked position,
- a button mechanism (400) containing
∘ the mentioned button (402),
∘ the mentioned button adjustment part (401),
∘ at least one screw (403) that fastens the mentioned button adjustment part (401)and the mentioned button (402),
∘ at least one button cap (404) that houses the mentioned screw (403),
∘ the mentioned button bearing pin, (405)
∘ the mentioned spring 2 (406).
**characterized in that** the mentioned mechanism contains,
- at least one stop pin (207) that is connected to the mentioned upper connection left bracket (103) by means of the mentioned bracket spacing 1 (103a) positioned on the mentioned upper connection left bracket (103) and that limits the movement of the mentioned backrest upper framework (100),
- a gear mechanism (300) that adjusts the mentioned backrest upper framework (100) forward and backwards with defined distances upon opening of the lock by means of disconnecting teeth 2 (301c) and teeth 1 (103c) on the mentioned gear part (301) positioned on it; that turns the lock back on by providing the mentioned contact again and that contains:
∘ the mentioned gear part (301),
∘ the mentioned support part (302),
∘ the mentioned guide part (303),
∘ the mentioned spring 1 (304),
∘ a mechanism cover part (305) that houses the parts,
∘ at least one bolt (306) that is a connection part and that enables connecting the mentioned backrest lower framework (200) and the mentioned backrest upper framework (100) parts,
∘ at least one nut (307) that is the mounting component of the gear mechanism cover part (305)
- the mentioned gear part (301) that moves downward with forward and downward movement of the mentioned guide part (303) that it is connected to by means of a guide spacing 1 (303a) and a gear protrusion (301a),
- the mentioned teeth 1 (103c) that fix the mentioned backrest upper framework (100) by contacting the teeth 2 (301c) on the mentioned gear part (301) positioned on the lower part of the mentioned upper connection left bracket (103) on the mentioned gear mechanism (300) and that release the mentioned backrest upper framework (100) upon disappearing of the mentioned contact and that are positioned on the lower part of the upper connection left bracket,
- the mentioned teeth 2 (301c) that fix the mentioned backrest upper framework (100) by contacting the mentioned teeth 1 (103c) and that release the mentioned backrest upper framework (100) upon disappearing of the mentioned contact and that are positioned on the upper part of the mentioned gear part (301),
- the mentioned support part (302) that moves the mentioned gear mechanism (300) gradually and connected to the mentioned gear (301) part by means of a support protrusion (302a) and a guide spacing 2 (303b),
- the mentioned guide part (303) that keeps the mentioned teeth 2 (301c) and teeth 1 (103c) in contact upon being pulled by the mentioned spring 1 (304) by means of the mentioned guide spacing 5 (303e); that pulls the mentioned gear part (301) it is connected to downward by being pulled forward and downward by the mentioned wire (308) it is connected to by means of at least one guide spacing 3 (303c); and that removes the contact between the mentioned teeth 1 (103c) and teeth 2 (301c).

2. Adjustable backrest mechanism according to Claim 1, **characterized in that** the mentioned backrest lower framework (200) contains a backrest right reinforcement (202) that supports a backrest lower pipe (201).

3. Adjustable backrest mechanism according to Claim 1, **characterized in that** the mentioned backrest lower framework (200) contains a backrest left reinforcement (206) that supports a backrest lower pipe (201).

4. Adjustable backrest mechanism according to Claim 1, **characterized in that** the mentioned mechanism contains a feedback spring (104) connected to the mentioned backrest upper pipe (101) by means of a feedback end (104a) positioned on it and to the mentioned backrest lower pipe (201) by means of a spring connection plate (105) positioned on it.

## Patentansprüche

1. Einstellbarer Rückenlehnenmechanismus in Fahrzeugsitzen, der einen Knopfinechanismus (400) beinhaltet, umfassend:
- eine oberes Rückenlehnenrohr (101), das den Körper eines oberen Rückenlehnengestells (100) bildet,
- eine unteres Rückenlehnenrohr (201), das den Körper eines unteren Rückenlehnengestells (200) bildet,
- eine obere rechte Verbindungshalterung (102), die mit dem erwähnten oberen Rückenlehnenrohr (101) und mit dem erwähnten unteren Rückenlehnenrohr (201) verbunden ist; und somit
das erwähnte obere Rückenlehnengestell (100) und das erwähnte untere Rückenlehnengestell (200) verbunden werden,
- eine obere linke Verbindungshalterung (103), die mit dem erwähnten oberen Rückenlehnenrohr (101) und mit dem erwähnten unteren Rückenlehnenrohr (201) verbunden ist;
umfassend
o mindestens einen Halterungszwischenraum 1 (103a),
o mindestens einen Halterungszwischenraum 2 (103b), und
o Zähne 1 (103c)
- eine untere Verbindungshalterung (203), die das erwähnte obere Rückenlehnengestell (100) und das erwähnte untere Rückenlehnengestell (200) verbindet,
- mindestens einen Verbindungsring (204), der mit dem erwähnten Halterungszwischenraum 2 (103b) verbunden ist und der eine Bewegung des erwähnten oberen Rückenlehnengestells (100) an dem erwähnten unteren Rückenlehnengestell (200) nach vorn oder nach hinten ermöglicht,
- eine untere Drahtverbindungshalterung (205), die das untere Verbindungsträgerteil eines Rohrs ist, in welchem ein Draht (308) positioniert ist, und die eine Feder 2 (406) auf ihr positioniert aufweist,
eine obere Drahtverbindungshalterung (209), die das obere Verbindungsträgerteil des Rohrs ist, in welchem der erwähnte Draht (308) positioniert ist, und die eine Feder 1 (304) auf ihr positioniert aufweist,
- wobei der erwähnte Draht (308) ein Führungsteil (303) mittels eines Führungszwischenraums 1 (303c) nach vorn und nach unten zieht, wenn er durch ein Knopfeinstellungsteil (401) mittels eines Knopfeinstellungszwischenraums 1 (401a) nach unten gezogen wird, und durch das Führungsteil (303) nach oben gezogen wird, wenn das Knopfeinstellungsteil (401) freigegeben wird,
- einen Lagerzapfen 1 (208a), der mit einem Getriebeteil (301) mittels mindestens eines Getriebezwischenraums (301b) am Getriebeteil verbunden ist und der an der erwähnten untereren Verbindungshalterung (203) positioniert ist,
- einen Lagerzapfen 2 (208b), der mit dem erwähnten Führungsteil (303) mittels mindestens eines Führungszwischenraums 4 (303d) am erwähnten Führungsteil (303) verbunden und mit einem Trägerteil (302) mittels mindestens eines am erwähnten Trägerteil (302) positionierten Trägerzwischenraums (302b) verbunden ist und der an der erwähnten unteren Verbindungshalterung (203) positioniert ist,
- die erwähnte Feder 2 (406), die mit dem erwähnten Knopfeinstellungsteil (401) mittels mindestens eines Knopfeinstellungszwischenraums 2 (401b) verbunden ist, die durch Ziehen des erwähnten Knopfeinstellungsteils (401) gespannt wird und in eine nicht gespannte Position zurückkehrt, wenn sie freigegeben wird,
- die erwähnte Feder 1 (304), die an der erwähnten oberen Drahtverbindungshalterung (209) positioniert ist, welche mit dem erwähnten oberen Rückenlehnengestell (100) verbunden ist, und die mit Vorwärts- und Abwärtsbewegung des erwähnten Führungsteils (303) gespannt wird, mit dem sie mittels mindestens eines Führungszwischenraums 5 (303e) verbunden ist,
- einen Knopf (402), der mit dem erwähnten Knopfeinstellungsteil (401) verbunden ist, das die Betätigungsbewegung des Benutzers durch den erwähnten Knopfeinstellungsteil (401) an den erwähnten Draht (308) überträgt, mit dem das erwähnte Knopfeinstellungsteil (401) mittels des erwähnten Knopfeinstellungszwischenraums 1 (401a) verbunden ist;
und der an einem Knopflagerzapfen (405) montiert ist,
- das erwähnte Knopfeinstellungsteil (401), das die erwähnte Feder 2 (406) mittels des erwähnten Knopfeinstellungszwischenraums 1 (401a) in Spannung setzt und den erwähnten Draht (308) nach unten zieht, nachdem der erwähnte Knopf (402) durch den Benutzer betätigt wird, und in seine Ausgangsposition durch die erwähnte Feder 2 (406) zurückgeführt wird, nachdem der erwähnte Knopf (402) freigegeben wird und den erwähnten Draht (308) freigibt;
und das mit dem erwähnten Knopflagerzapfen (405) mittels mindestens eines Knopfeinstellungszwischenraums 3 (401c) verbunden ist,
- die erwähnte Feder 2 (406), die an der erwähnten unteren Drahtverbindungshalterung (205) positioniert ist, welche mit dem erwähnten unteren Rückenlehnengestell (100) verbunden ist, die das erwähnte Knopfeinstellungsteil (401), welcher am erwähnten Knopflagerzapfen (405) montiert ist, mit dem es mittels des erwähnten Knopfeinstellungszwischenraums 2 (401b) verbunden ist, in verriegelter Position hält,
- einen Knopfmechanismus (400), der Folgendes beinhaltet:
o den erwähnten Knopf (402),
o das erwähnte Knopfeinstellungsteil (401),
o mindestens eine Schraube (403), die das erwähnte Knopfeinstellungsteil (401) und den erwähnten Knopf (402) befestigt,
o mindestens eine Knopfkappe (404), die die erwähnte Schraube (403) aufnimmt,
o den erwähnten Knopflagerzapfen (405),
o die erwähnte Feder 2 (406),
**dadurch gekennzeichnet, dass** der erwähnte Mechanismus Folgendes enthält,
- mindestens einen Anschlagstift (207), der mit der erwähnten oberen linken Verbindungshalterung (103) mittels des erwähnten, an der erwähnten oberen linken Verbindungshalterung (103) positionierten Halterungszwischenraums 1 (103a) verbunden ist und der die Bewegung des erwähnten oberen Rückenlehnengestells (100) begrenzt,
- einen Getriebemechanismus (300), der das erwähnte obere Rückenlehnengestell (100) mit definierten Abständen beim Öffnen der Verriegelung mittels Trennen der Zähne 2 (301c) und Zähne 1 (103c) am erwähnten, auf diesen positionierten Getriebeteil (301) nach vorn oder nach hinten einstellt;
der die Verriegelung wieder aktiviert, indem der erwähnte Kontakt wieder bereitgestellt wird, und der Folgendes beinhaltet:
∘ das erwähnte Getriebeteil (301),
∘ das erwähnte Trägerteil (302),
∘ das erwähnte Führungsteil (303),
∘ die erwähnte Feder 1 (304),
∘ ein Mechanismusabdeckteil (305), das die Teile aufnimmt,
∘ mindestens eine Schraube (306), die ein Verbindungsteil ist und die das Verbinden des erwähnten unteren Rückenlehnengestells (200) und den Teilen des erwähnten oberen Rückenlehnengestells (100) ermöglicht,
∘ mindestens eine Mutter (307), die das Befestigungsbauteil des Getriebemechanismusabdeckteils (305) ist,
- das erwähnte Getriebeteil (301), das sich nach unten mit Vorwärts- und Abwärtsbewegung des erwähnten Führungsteils (303) bewegt, mit dem es mittels eines Führungszwischenraums 1 (303a) und eines Getriebevorsprungs (301a) verbunden ist,
- die erwähnten Zähne 1 (103c), die das erwähnte obere Rückenlehnengestell (100) durch Kontaktieren der Zähne 2 (301c) am erwähnten Getriebeteil (301) fixieren, das am unteren Teil der erwähnten oberen linken Verbindungshalterung (103) am erwähnten Getriebemechanismus (300) positioniert ist, und die das erwähnte obere Rückenlehnengestell (100) bei Wegfallen des erwähnten Kontakts freigeben und die am unteren Teil der oberen linken Verbindungshalterung positioniert sind,
- die erwähnten Zähne 2 (301c), die das erwähnte obere Rückenlehnengestell (100) durch Kontaktieren der erwähnten Zähne 1 (103c) fixieren und die das erwähnte obere Rückenlehnengestell (100) bei Wegfallen des erwähnten Kontakts freigeben und die am oberen Teil des erwähnten Getriebeteils (301) positioniert sind,
- das erwähnte Trägerteil (302), das den erwähnten Getriebemechanismus (300) schrittweise und mit dem erwähnten Getriebeteil (301) verbunden mittels eines Trägervorsprungs (302a) und eines Führungszwischenraums 2 (303b) bewegt,
- das erwähnte Führungsteil (303), das die erwähnten Zähne 2 (301c) und Zähne 1 (103c) in Kontakt hält beim Gezogenwerden durch die erwähnte Feder 1 (304) mittels des erwähnten Führungszwischenraums 5 (303e);
das das erwähnte Getriebeteil (301), mit dem es verbunden ist, nach unten zieht, indem es nach vorne und nach unten durch den erwähnten Draht (308) gezogen wird, mit dem es mittels mindestens eines Führungszwischenraums 3 (303c) verbunden ist;
und das den Kontakt zwischen den erwähnten Zähnen 1 (103c) und Zähnen 2 (301c) aufhebt.

2. Einstellbarer Rückenlehnenmechanismus nach Anspruch 1, **dadurch gekennzeichnet, dass** das erwähnte untere Rückenlehnengestell (200) eine rechte Rückenlehnenverstärkung (202) beinhaltet, die ein unteres Rückenlehnenrohr (201) trägt.

3. Einstellbarer Rückenlehnenmechanismus nach Anspruch 1, **dadurch gekennzeichnet, dass** das erwähnte untere Rückenlehnengestell (200) eine linke Rückenlehnenverstärkung (206) beinhaltet, die ein unteres Rückenlehnenrohr (201) trägt.

4. Einstellbarer Rückenlehnenmechanismus nach Anspruch 1, **dadurch gekennzeichnet, dass** der erwähnte Mechanismus eine Rückkopplungsfeder (104) beinhaltet, die mit dem erwähnten oberen Rückenlehnenrohr (101) mittels eines an diesem positionierten Rückkopplungsende (104a) und mit dem erwähnten unteren Rückenlehnenrohr (201) mittels einer an diesem positionierten Federanschlussplatte (105) verbunden ist.

## Revendications

1. Mécanisme de dossier réglable dans les sièges de voiture contenant un mécanisme à bouton (400) comprenant :
- un tube supérieur de dossier (101) constituant le corps d'un cadre supérieur de dossier (100),
- un tube inférieur de dossier (201) constituant le corps d'un cadre inférieur de dossier (200),
- une patte droite de raccord supérieure (102) qui est raccordée au tube supérieur de dossier mentionné (101) et au tube inférieur de dossier mentionné (201) ;
raccordant ainsi le cadre supérieur de dossier mentionné (100) et le cadre inférieur de dossier mentionné (200),
- une patte gauche de raccord supérieure (103) qui est raccordée au tube supérieur de dossier mentionné (101) et au tube inférieur de dossier mentionné (201) ;
comprenant
∘ au moins un espace de patte 1 (103a),
∘ au moins un espace de patte 2 (103b), et
∘ une denture 1 (103c)
- un patte de raccord inférieur (203) raccordant le cadre supérieur de dossier mentionné (100) et le cadre inférieur de dossier mentionné (200),
- au moins une bague de raccord (204) qui est raccordée à l'espace de patte 2 mentionné (103b) et qui permet un déplacement vers l'avant ou vers l'arrière du cadre supérieur de dossier mentionné (100) sur le cadre inférieur de dossier mentionné (200),
- une patte de raccord inférieure de fil métallique (205) qui est la partie support de raccord inférieure d'un tube, dans lequel un fil métallique (308) est positionné, et qui possède un ressort 2 (406) positionné sur celui-ci, une patte de raccord supérieure de fil métallique (209) qui est une partie support de raccord supérieure dudit tube dans laquelle est positionnée le fil métallique mentionné (308) et sur laquelle est disposé un ressort 1 (304),
- le fil métallique mentionné (308) tirant vers l'avant et vers le bas une partie guidage (303) au moyen d'un espace de guidage 1 (303c) lorsqu'il est abaissé par une partie réglage de bouton (401) au moyen d'un espace de réglage de bouton 1 (401a), et étant tiré vers le haut par ladite partie guidage (303) lorsque ladite partie réglage de bouton (401) est relâchée,
- un tourillon 1 (208a) qui est raccordé à une partie engrenage (301) au moyen d'au moins un espace d'engrenage (301b) sur la partie engrenage et qui est positionné sur le patte de raccord inférieure mentionné (203),
- un tourillon 2 (208b) qui est raccordé à la partie guidage mentionnée (303) au moyen d'au moins un espace de guidage 4 (303d) sur la partie guidage mentionnée (303) et raccordé à une partie support (302) au moyen de au moins un espace de support (302b) positionné sur la partie support mentionnée (302) et qui est positionné sur le patte de connexion inférieure mentionnée (203),
- le ressort mentionné 2 (406) qui est raccordé à la partie réglage de bouton mentionnée (401) au moyen d'au moins un espace de réglage de bouton 2 (401b), qui est étiré en tirant sur la partie réglage de bouton mentionnée (401) et revient à une position non étirée quand il est relâché,
- le ressort mentionné 1 (304) qui est positionné sur la patte de raccord supérieure de fil métallique mentionnée (209), qui est raccordée au cadre supérieur de dossier mentionné (100), et est étiré avec le déplacement vers l'avant et vers le bas de la partie guidage mentionnée (303) auquel il est raccordé au moyen d'un espace de guidage 5 (303e),
- un bouton (402) qui est raccordé à la partie réglage de bouton mentionnée (401) qui transmet le déplacement d'actionnement de l'utilisateur par l'intermédiaire de la partie réglage de bouton mentionnée (401) au fil métallique mentionné (308) auquel la partie réglage de bouton mentionnée (401) est raccordée au moyen de l'espace de réglage de bouton mentionné 1 (401a) ;
et qui est monté sur un tourillon de bouton (405),
- la partie réglage de bouton mentionnée (401) qui amène le ressort mentionné 2 (406) à être étiré au moyen de l'espace de réglage de bouton mentionnée 1 (401a) et tire le fil métallique mentionné (308) vers le bas après que le bouton mentionné (402) est actionné par l'utilisateur, et est ramené à sa position initiale par le ressort mentionné 2 (406) après que le bouton mentionné (402) est relâché et libère le fil métallique mentionné (308) ;
et qui est raccordé au tourillon de bouton (405) mentionné au moyen d'au moins un espace de réglage de bouton 3 (401c),
- le ressort mentionné 2 (406), qui est positionné sur la patte de raccord inférieure de fil métallique mentionnée (205), qui est raccordé au cadre inférieur de dossier mentionné (100), qui maintient en position verrouillée la partie réglage de bouton mentionnée (401) qui est montée sur le tourillon de bouton mentionné (405) auquel il est raccordé au moyen de l'espace de réglage de bouton mentionné 2 (401b),
- un mécanisme à bouton (400) contenant
∘ le bouton mentionné (402),
∘ la partie réglage de bouton mentionnée (401),
∘ au moins une vis (403) fixant la partie réglage de bouton mentionnée (401) et le bouton mentionné (402),
∘ au moins un capuchon de bouton (404) dans lequel loge la vis mentionnée (403),
∘ le tourillon (405) de bouton mentionné,
∘ le ressort mentionné 2 (406),
**caractérisé en ce que** le mécanisme mentionné contient,
- au moins une goupille d'arrêt (207) qui est raccordée à la patte gauche de raccord supérieure mentionnée (103) au moyen de l'espace de patte mentionné 1 (103a) positionné sur la patte gauche de raccord supérieure mentionnée (103) et qui limite le déplacement du cadre supérieur de dossier mentionné (100),
- un mécanisme d'engrenage (300) qui règle le cadre supérieur de dossier mentionné (100) vers l'avant et vers l'arrière avec des distances définies lors de l'ouverture du verrou au moyen de la denture de désengagement 2 (301c) et de la denture 1 (103c) de la partie engrenage mentionnée (301) positionnée sur celui-ci ;
qui réactive le verrou en fournissant à nouveau le contact mentionné et qui contient:
∘ la partie engrenage mentionnée (301),
∘ la partie support mentionnée (302),
∘ la partie guidage mentionnée (303),
∘ le ressort mentionné 1 (304),
∘ une partie couvercle de mécanisme (305) qui loge les pièces,
∘ au moins un boulon (306) qui est une partie de raccord et qui permet de raccorder le cadre inférieur de dossier mentionné (200) et les parties de cadre supérieur de dossier mentionnées (100),
∘ au moins un écrou (307) qui est le composant de montage de la partie couvercle de mécanisme d'engrenage (305)
- la partie engrenage mentionnée (301) qui se déplace vers le bas avec le déplacement vers l'avant et vers le bas de la partie de guidage mentionnée (303) à laquelle elle est raccordée au moyen d'un espace de guidage 1 (303a) et d'une saillie d'engrenage (301a),
- la denture mentionnée 1 (103c) fixant le cadre supérieur de dossier mentionné (100) venant en contact avec la denture 2 (301c) sur la partie engrenage mentionnée (301) positionnée sur la partie inférieure de la patte gauche de raccord supérieure mentionnée (103) sur le mécanisme d'engrenage mentionné (300) et qui libère le cadre supérieur de dossier mentionné (100) lors de la disparition du contact mentionné et qui est positionnée sur la partie inférieure de la patte gauche de raccord supérieure,
- la denture mentionnée 2 (301c) fixant le cadre supérieur de dossier mentionné (100) en venant au contact de la denture mentionnée 1 (103c) et qui libère le cadre supérieur de dossier mentionné (100) lors de la disparition du contact mentionné et qui est positionnée sur la partie supérieure de la partie engrenage mentionnée (301),
- la partie de support mentionnée (302) qui déplace le mécanisme à engrenage mentionné (300) progressivement et est raccordée à la partie d'engrenage mentionnée (301) au moyen d'une saillie de support (302a) et d'un espace de guidage 2 (303b),
- la partie guidage mentionnée (303) qui maintient la denture mentionnées 2 (301c) et la denture 1 (103c) en contact lorsqu'elles sont tirées par le ressort mentionné 1 (304) au moyen de l'espace de guidage mentionné 5 (303e) ;
qui tire la partie d'engrenage mentionnée (301) à laquelle il est raccordé vers le bas en étant tiré vers l'avant et vers le bas par le fil métallique mentionné (308) auquel il est raccordé au moyen d'au moins un espace de guidage 3 (303c) ;
et qui supprime le contact entre les dentures 1 (103c) et 2 (301c) mentionnées.

2. Mécanisme de dossier réglable selon la revendication 1, **caractérisé en ce que** le cadre inférieur de dossier mentionné (200) contient un renfort droit de dossier (202) qui supporte un tube inférieur de dossier (201).

3. Mécanisme de dossier réglable selon la revendication 1, **caractérisé en ce que** le cadre inférieur de dossier mentionné (200) contient un renfort gauche de dossier (206) qui supporte un tube inférieur de dossier (201).

4. Mécanisme de dossier réglable selon la revendication 1, **caractérisé en ce que** ledit mécanisme mentionné contient un ressort de rappel (104) raccordé au tube supérieur de dossier mentionné (101) au moyen d'une extrémité de rappel (104a) positionnée sur celui-ci et au tube inférieur de dossier mentionné (201) au moyen d'une plaque de raccord à ressort (105) positionnée sur celui-ci.
